# EUROPÄISCHE PATENTANMELDUNG

(11) **EP 1 351 116 A2**
(43) Veröffentlichungstag der Anmeldung: **08.10.2003**
(21) Anmeldenummer: 03004791.4
(22) Anmeldetag: 05.03.2003
(51) Int. Cl.: G06F 1/18

(54) **Vorrichtung zum Bewegen von Computern**

(30) Priorität: 11.03.2002 DE 20204345 U; 25.03.2002 DE 20205004 U; 14.06.2002 DE 10226768
(71) Anmelder: Decker, Johannes, 10777 Berlin (DE)
(72) Erfinder: Decker, Johannes, Dr., 10777 Berlin (DE); Hering, Peter, 10777 Berlin (DE)
(74) Vertreter: Weisse, Renate Dr.

(57) **Zusammenfassung**

Eine Vorrichtung (12) zum Bewegen von Computern 10, an welchen wenigstens ein Kabel angeschlossen ist, enthaltend eine horizontale Trägerfläche (42) mit Rollen (18, 20, 22, 24), mit denen die Trägerfläche (42) bewegbar ist, ist dadurch gekennzeichnet, daß Befestigungsmittel (54, 56) vorgesehen sind, mittels derer das oder die Kabel (14) fest an der Vorrichtung (12) fixierbar sind. Dabei ist ein Kabelbinder (54, 56) zur Fixierung der Kabel (14) vorgesehen.Zum Bewegen der Trägerfläche sind vier in Lagern (38) gelagerte Kugelrollen (36) vorgesehen. Ein Rand (46) der Trägerfläche (42) ist gegenüber der Trägerfläche erhöht. Ein senkrecht zu dem Rand verlaufendes Langloch (28) ist in der Trägerfläche vorgesehen und ein in dem Langloch verschiebbares Klemm-Mittel, mit welchem ein auf der Trägerfläche aufgestellter Computer zwischen dem erhöhten Rand und dem Klemm-Mittel festklemmbar ist.

## Beschreibung

### Technisches Gebiet

Die Erfindung betrifft eine Vorrichtung zum Bewegen von Computern, an welchen wenigstens ein Kabel angeschlossen ist, enthaltend eine horizontale Trägerfläche mit Rollen, mit denen die Trägerfläche bewegbar ist.

Computer oder andere technische Geräte weisen üblicherweise eine Vielzahl von Kabeln auf, welche über Kabel-Steckverbindungen mit dem Gerät verbunden sind. Solche Kabel dienen zur Verbindung mit Periferiegeräten, wie Druckern, Modem, Bildschirmen und dergleichen. Außerdem sind Stromkabel zur Energieversorgung vorgesehen. Insbesondere Computer in Tower-Form werden gewöhnlich nicht auf dem Arbeitsplatz, sondern unterhalb der Arbeitsfläche in einer Ecke oder dergleichen abgestellt. Dabei soll der Computer möglichst wenig sichtbar sein und wenig stören. Es hat sich aber herausgestellt, daß der Computer bei Wartungsarbeiten und beim Reinigen auch der Computerumgebung bewegt werden muß.

### Stand der Technik

Es ist bekannt, Computer auf Vorrichtungen anzuordnen, die als Computer-Wagen oder CPU-Ständer bezeichnet werden. Dies sind Halterungen, welche auf der Unterseite mit Rollen versehen sind. Diese bekannten Wagen weisen eine Vielzahl von Nachteilen auf.

Die bekannten Computerwagen haben durchweg Rollen, welche eine zylindrische Form haben. Die Rollen sind in einer Aufnahme um eine horizontale Achse drehbar gelagert. Die Aufnahme der Rollen ist um eine weitere, senkrechte Achse drehbar gelagert. Durch Reibung und die einmal eingenommene Lage der Rollen ist das Verschieben in eine gewünschte Richtung mit einem erheblichen Kraftaufwand verbunden. Die Rollen bewegen sich häufig zunächst in die falsche Richtung. Das macht die Anordnung nur schwer handhabbar. Auch benötigen die Rollen erheblichen Platz in vertikaler Richtung. Der Computerwagen ist daher stark erhöht.

Weiterhin besteht bei den bekannten Computerwagen das Problem, daß durch das ungewollte Verschieben erhebliche Zugkräfte auf die Kabelsteckverbindungen ausgeübt werden können. Die Kabelsteckverbindungen können dadurch gelöst werden. Insbesondere bei Reinigungskräften mangelt es gewöhnlich an den erforderlichen Fachkenntnissen eine einmal gelöste Steckverbindung wieder herzustellen, selbst wenn erkannt wurde, daß die Verbindung gelöst wurde. Der Computer-Anwender muß dann aufwending die Wiederherstellung aller Verbindungen veranlassen.

Die bekannten Computerwagen sind weiterhin mit einer Breitenverstellung versehen, um Computer verschiedener Abmessungen aufnehmen zu können. Die bekannten Breitenverstellungen sind aufwendig und verteuern die Herstellung.

### Offenbarung der Erfindung

Es ist Aufgabe der Erfindung einen kostengünstigen Vorrichtung der eingangs genannten Art zu schaffen, bei welcher ein Computer bewegt werden kann ohne daß die Kabelsteckverbindungen gelöst werden.

Erfindungsgemäß wird die Aufgabe dadurch gelöst, daß die Befestigungsmittel vorgesehen sind, mittels derer das oder die Kabel fest an der Vorrichtung fixierbar sind. Dadurch werden die Zugkräfte nicht auf die Steckverbindung ausgeübt, sondern auf die Stelle, an der die Kabel an der Vorrichtung fixiert sind. Die Kabelsteckverbindung bleibt unberührt. Die Befestigungsmittel können als Kabelbinder ausgebildet sein. Insbesondere lösbare Kunststoff-Kabelbinder sind hierfür besonders gut geeignet. Es können aber auch Kabel-Klettverschlüsse zur Fixierung der Kabel vorgesehen sein. Solche Kabelbinder bestehen im wesentlichen aus einer Plastikschlaufe, welche um die Kabel herum und dann zusammengezogen werden. Die Schlaufe wird dann in zusammengezogenem Zustand fixiert.

In einer ersten Ausgestaltung ist die horizontale Trägerfläche die Grundfläche eines den Computer umgebenden Gehäuses. Alternativ ist die horizontale Trägerfläche eine eigene Fläche, die zusammen mit den Rollen einen eigenen Wagen bildet, auf dem der Computer aufgesetzt wird.

In einer Ausgestaltung der Erfindung sind vier in Lagern gelagerte Kugelrollen zum Bewegen der Trägerfläche vorgesehen sind. Die Kugelrollen können als Stahlkugelrollen ausgebildet sein. Kugelrollen haben gegenüber zylindrischen Rollen den Vorteil, daß Sie in jeder Richtung rollbar sind unabhängig von der vorherigen Ausrichtung oder Lage der Vorrichtung. Die zusätzlich zum Drehen eines Gelenks um eine vertikale Achse erforderliche Haftreibung, wenn die Richtung beim Fahren geändert werden soll, tritt nicht auf. Auch können Kugelrollen kleiner ausgeführt werden und die Trägerfläche kann näher am Boden angeordnet werden. Die Anordnung wird dadurch weniger voluminös. Durch die leichtere Rollbarkeit der Vorrichtung und die verringerte Haftreibung werden ungewollte Bewegungen (Rucken) oder Bewegungen in eine falsche Richtung beim Ausrichten von Rollen vermieden, die sonst wiederum unerwünschte Zugkräfte an den Kabeln ausüben würden.

Vorzugsweise ist eine Feststelleinrichtung zum Feststellen des Wagens vorgesehen. Dadurch wird der Wagen in der Arbeitsposition arretierbar und ein unbeabsichtigtes Bewegen vermieden. Die Feststelleinrichtung kann von einer an der Unterseite der horizontalen Trägerfläche angeschraubten Rändelschraube gebildet sein, welche zum Feststellen soweit herausschraubbar ist, daß die Schraube einen Bodenkontakt herstellt. Insbesondere bei der Verwendung von Kugelrollen ist die Trägerfläche so dicht am Boden, daß die Rändelschraube kurz ausgeführt werden kann. Dadurch kann sie alle wirkenden Kräfte auch bei vergleichsweise kleinen Abmessungen aufnehmen.

Vorzugsweise sind die Lager der Kugelrollen in mit Quetschrippen versehene Rundbuchsen an der Unterseite der Trägerfläche eingesteckt. Dann besteht die Möglichkeit, die Lager und die Kugelrollen aus einem harten Material wie Stahl auszuführen, während der übrige Teil der Vorrichtung im Spritzgußverfahren aus Kunststoff herstellbar ist. Die Verbindung zwischen den beiden Materialien wird durch einfaches Einstecken hergestellt. Die Anordnung ist dann aufgrund der einfachen Herstellung besonders kostengünstig.

In einer weiteren Ausgestaltung der Erfindung ist die Vorrichtung als Wagen ausgebildet und ein Rand (46) ist vorgesehen, der gegenüber der Trägerfläche (42) erhöht ist. Weiterhin ist ein senkrecht zu dem Rand verlaufendes Langloch (28) in der Trägerfläche vorgesehen und ein in dem Langloch verschiebbares Klemm-Mittel, mit welchem ein auf der Trägerfläche aufgestellter Computer zwischen dem erhöhten Rand und dem Klemm-Mittel festklemmbar ist. Damit kann der Computer verrutschsicher auf der Trägerfläche angebracht werden. Vorzugsweise ist der Rand auf einer kürzeren Seite (Vorderseite) der Trägerfläche vorgesehen und das Langloch erstreckt sich nur über einen Teil der Länge der Trägerfläche, der sich in einem Abstand von dem Rand befindet. Dann können Computer verschiedener Längen festgeklemmt werden. Das Langloch muß gerade so lang sein, daß die Längendifferenzen verschiedener Computer berücksichtigt werden. Entsprechend ist das Langloch in einem Abstand von dem erhöhten Rand vorgesehen, welcher der Länge des Computers entspricht. Wenn der Computer entlang seiner Länge ausreichend festgeklemmt wird, ist eine Halterung in Richtung der Computerbreite nicht erforderlich. Die Trägerfläche kann entsprechend entlang der Seitenränder ohne erhöhten Rand ausgebildet sein. Dies ermöglicht die Aufnahme von Computern unterschiedlicher Breite ohne weitere einstellbare Vorrichtungen.

In einer weiteren Ausgestaltung der Erfindung ist vor dem erhöhten Rand eine Vertiefung in der Trägerfläche vorgesehen ist, welche sich über die gesamte Breite der Trägerfläche erstreckt. Diese Vertiefung dient der Aufnahme von Vorsprüngen, Füßen oder dergleichen, die über die Ebene der Computerunterseite hervorstehen.

Die Klemmvorrichtung kann von einem Klemmwinkel gebildet sein, welcher mittels einer Schraube verschiebbar in dem Langloch geführt ist. Dies ist eine besonders kostengünstige und leichte Lösung.

Vorzugsweise ist wenigstens ein Paar von Schlitzen in der Trägerfläche vorgesehen, durch welche der Kabelbinder durchsteckbar ist. Die Paare von Schlitzen können so angeordnet sein, daß jeweils vier Schlitze in Form von Quadraten in der Nähe eines Rands der Trägerfläche vorgesehen sind. Es können zum Beispiel in drei aus vier Schlitzen gebildeten Quadraten am rückwärtigen Ende der Trägerfläche angeordnet sein. Durch die Ausrichtung der Schlitze in verschiedenen Richtungen und die verschiedenen Positionen können die Kabelbinder in der Lage durchgesteckt werden, wo auf den Kabelzopf und auf die Kabelsteckverbindungen die geringste Kraft ausgeübt wird. Die Kabel müssen nicht in eine vorgegebene Lage gezwungen werden.

Ausgestaltungen der Erfindung sind Gegenstand der Unteransprüche. Ausführungsbeispiele sind nachstehend unter Bezugnahme auf die beigefügten Zeichnungen näher erläutert.

### Kurze Beschreibung der Zeichnungen

- Fig.1: ist eine perspektivische Darstellung eines auf einem separaten Computerwagen angeordneten PC-Towers
- Fig.2: ist eine perspektivische Darstellung eines Ausschnitts des rückwärtigen Teils des Computers aus Fig.1
- Fig.3: ist eine Draufsicht auf die Unterseite des Computerwagens
- Fig.4: ist eine Draufsicht auf die Oberseite des Computerwagens
- Fig.5: ist eine Seitenansicht des Computerwagens
- Fig.6: ist eine Seitenansicht auf die Vorderseite des Computerwagens
- Fig.7: ist eine vergrößerte Darstellung der Unterseite eines rückwärtigen Teils des Computerwagens.
- Fig.8: ist zeigt einen Ausschnitt eines Kabelbündels, welches mittel Kabelbinder an dem Computerwagen fixiert sind.
- Fig.9: zeigt ein Steckkugellager im Detail
- Fig. 10: zeigt einen Kabelbinder im Detail
- Fig. 11: zeigt einen Vorsprung an einem Computergehäuse mit Schlitzen zum Befestigen von Kabeln mittels Kabelbinder
- Fig. 12: zeigt einen Vorsprung an einem Computergehäuse mit einer Klemmvorrichtung zum Anklemmen von Kabeln.

### Beschreibung der Ausführungsbeispiele

### 1.Ausführungsbeispiel: Computerwagen, auf welche Computer mit Gehäuse aufgesetzt werden

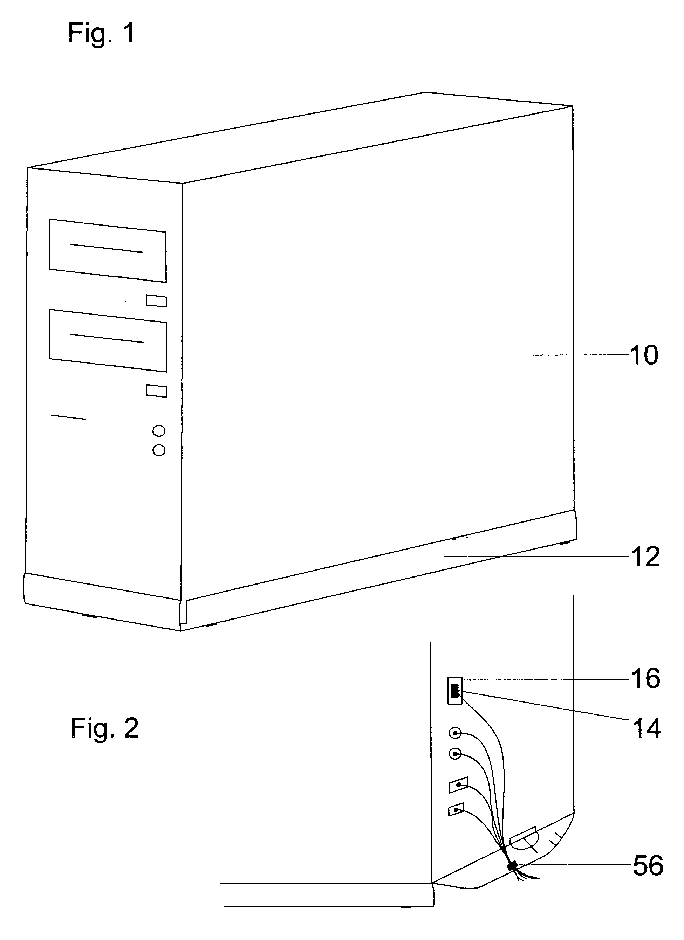

In Fig.1 ist ein PC-Tower 10 dargestellt. Der Tower ist auf einem fahrbaren Wagen 12 aufgestellt. Auf der Hinterseite des PC-Towers 10 sind Kabel 14 mittels Kabelsteckverbindungen 16 vorgesehen. Dies ist in Fig.2 dargestellt.

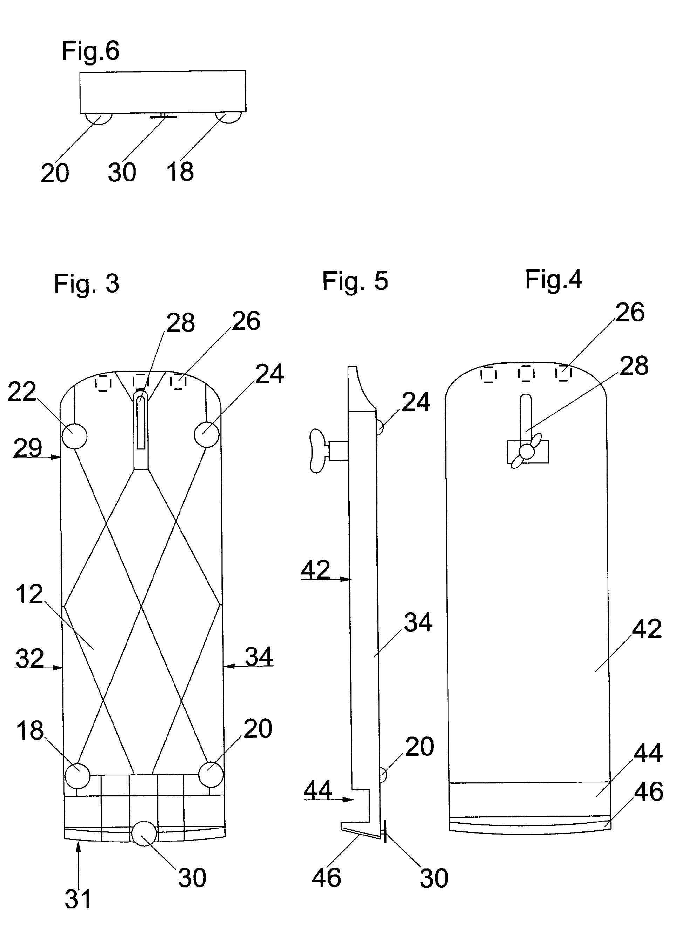

Der Wagen 12 ist nochmals in Fig.3 bis 7 dargestellt. In Fig.3 ist die Unterseite des Wagens 12 gezeigt. Der Wagen umfasst vier Kugelrollen 18, 20, 22 und 24. Weiterhin sind drei mal vier kleinere Schlitze 26 und ein größeres Langloch 28 an einem ersten Ende 29 des Wagens 12 vorgesehen. An dem dem ersten Ende 29 gegenüberliegenden Ende 31 des Wagens 12 ist eine Rändelschraube 30 vorgesehen. Die Rändelschraube 30 ist mittig bezüglich der Seiten 32 und 34 angeordnet.

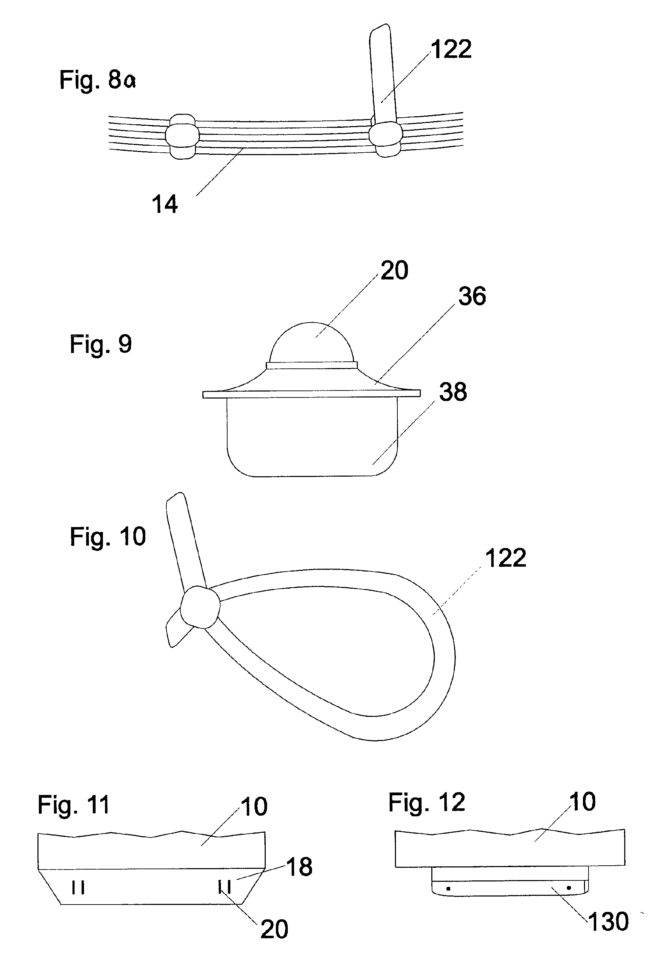

In Fig.9 ist die Kugelrolle 20 im Detail dargestellt. Dabei läuft die Kugel 20 in einem Kugellager 38. Die Kugel 20 ist in beliebige Richtungen gleichermaßen beweglich. In Fig.6 ist die Rändelschraube 30 dargestellt. Die Schraube ist in ein in der Unterseite des Wagens befindlichen Gewinde eingeschraubt. Zum Arretieren des Wagens wird die Schraube 30 so weit herausgedreht, daß die Schraube Bodenkontakt herstellt.

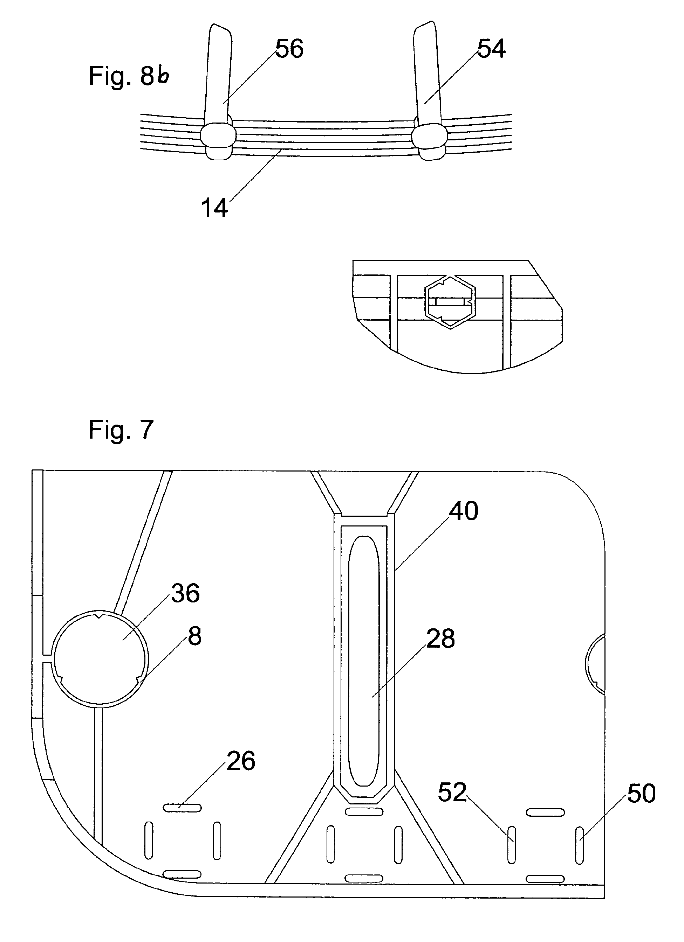

In Fig. 7 ist das Langloch 28 im Detail dargestellt. Das Langloch 28 ist mittig zwischen den Seiten 32 und 34 in dem der Rändelschraube 30 gegenüberliegenden rückwärtigen Teil angeordnet. Um das Langloch 28 herum erstreckt sich auf der Unterseite in einem Abstand von etwa 1 mm ein Führungsrand 40 nach unten. Eine Flügelschraube ist von oben in das Langloch einsteckbar und kann mit einer Mutter (nicht dargestellt) von unten innerhalb des Führungsrands festgezogen werden. Zwischen der Flügelschraube und der Oberseite des Computerwagens (Trägerfläche) ist eine Kunststofftklemme eingefügt. Die Kunststoffklemme besteht im wesentlichen aus einem mehrere Milimeter dicken Halbkreisförmigen Körper, in dem eine Bohrung für die Flügelschraube vorgesehen ist. Die Kunststoffklemme kann mit der Flügelschraube an einer beliebigen Position entlang des Langlochs 28 fixiert werden. Die gerade Seite der Kunststoffklemme liegt dabei an der Trägerfläche des Computerwagens an.

Am vorderen Teil des Computerwagens mündet die Trägerfläche 42 in einer Vertiefung 44, die mit einem gegenüber der Trägerfläche 42 erhöhten Rand 46 abschließt. Dies ist in Fig.5 dargestellt. Ein Computer wird in der in Fig.1 dargestellten Weise auf die Trägerfläche 42 gestellt, wobei er nach vorne bis an den Rand 46 geschoben wird. Eventuell an der Computerunterseite vorstehende Füße oder Vorsprünge finden in der Vertiefung 44 Platz. Dadurch liegt der Computer vollständig auf der Trägerfläche 42 auf. Die Klemme kann nun in dem Langloch 28 soweit vorgeschoben werden, daß sie den Computer gegen den Rand drückt, so daß er nicht mehr verrutschen kann. Eine zusätzliche Breitenverstellung oder Arretierung ist nicht erforderlich. Entsprechend ist die Trägerfläche 42 an den Seiten 32 und 34 ohne vorstehenden Rand ausgebildet.

Im rückwärtigen Teil des Computerwagens sind drei mal vier Schlitze 26 angeordnet. Die Schlitze sind in Fig.7 im Detail dargestellt. Jeweils 2 Paare von Schlitzen sind in einem Quadrat angeordnet. Das Kunststoff-Band eines lösbaren Kabelbinders 122, wie er in Fig. 10 dargestellt ist, wird durch einen ersten Schlitz 50 nach unten durchgezogen und durch einen weiteren Schlitz 52 wieder nach oben. Beim Zusammenziehen des Kabelbinders 122 können auf diese Weise alle Kabel 14 als Bündel mit dem Wagen verbunden werden. Dies ist in Fig. 8a im Detail dargestellt. Je nach Biegesteifigkeit der Kabel 14 kann es sinnvoll sein, jeweils andere Schlitze zu wählen um die Kräfte auf die Kabelsteckverbindungen gering zu halten. Die Fixierung der Kabel 14 mittels zweier Kabelbinder 54 und 56 ist in Fig.8b nochmals im Datail dargestellt.

Statt einer Schlitzanordnung, wie sie in Fig.7 dargestellt ist, kann auch eine Anordnung wie in Fig. 11 verwendet werden. Weiterhin kann die Anordnung statt Schlitzen mit Kabelbindern auch eine Klemmvorrichtung 130 aufweisen, in welcher die Kabel eingeklemmt werden. Dies ist in Fig. 12 dargestellt.

### 2.Ausführungsbeispiel: Fahrbarer Computer mit einem mit Rollen versehenen Gehäuse

In einem weiteren Ausführungsbeispiel ist das Gehäuse direkt mit Rollen versehen. Dann befinden sich die Aufnahmen für die Kugellager unmittelbar in der Unterseite des Computergehäuses. Das Gehäuse weist dann einen Vorsprung auf, an welchem sich analog zu Fig. 7, 11 oder 12 die Fixierungseinrichtung mit Klemmen oder Bändern für die Kabel befindet.

## Patentansprüche

1. Vorrichtung (12) zum Bewegen von Computern (10), an welchen wenigstens ein Kabel angeschlossen ist, enthaltend eine horizontale Trägerfläche (42) mit Rollen (18, 20, 22, 24), mit denen die Trägerfläche (42) bewegbar ist, **dadurch gekennzeichnet, daß** Befestigungsmittel (54, 56) vorgesehen sind, mittels derer das oder die Kabel (14) fest an der Vorrichtung (12) fixierbar sind.

2. Vorrichtung nach Anspruch 1, **dadurch gekennzeichnet, daß** die horizontale Trägerfläche die Grundfläche eines den Computer umgebenden Gehäuses ist.

3. Vorrichtung nach Anspruch 1 oder 2, **dadurch gekennzeichnet, daß** wenigstens ein Kabelbinder in (54, 56) zur Fixierung der Kabel (14) vorgesehen ist.

4. Vorrichtung nach einem der vorgehenden Ansprüche, **dadurch gekennzeichnet, daß** vier in Lagern (38) gelagerte Kugelrollen (36) zum Bewegen der Trägerfläche (42) vorgesehen sind.

5. Vorrichtung nach einem der vorgehenden Ansprüche, **dadurch gekennzeichnet, daß** eine Feststelleinrichtung (30) zum Feststellen der Trägerfläche (12) vorgesehen ist.

6. Vorrichtung nach Anspruch 5, **dadurch gekennzeichnet, daß** die Feststelleinrichtung von einer an der Unterseite der horizontalen Trägerfläche angeschraubten Rändelschraube (30) gebildet wird, welche zum Feststellen soweit herausschraubbar ist, daß ein Bodenkontakt herstellbar ist.

7. Vorrichtung nach einem der vorgehenden Ansprüche 4 bis 6, **dadurch gekennzeichnet, daß** die Lager (38) der Kugelrollen (36) in mit Quetschrippen versehene Rundbuchsen an der Unterseite der Trägerfläche eingesteckt sind.

8. Vorrichtung nach einem der vorgehenden Ansprüche, **dadurch gekennzeichnet, daß** sie als Wagen ausgebildet ist und daß ein Rand (46) vorgesehen ist, der gegenüber der Trägerfläche (42) erhöht ist, ein senkrecht zu dem Rand verlaufendes Langloch (28) in der Trägerfläche vorgesehen ist und ein in dem Langloch verschiebbares Klemm-Mittel vorgesehen ist, mit welchem ein auf der Trägerfläche aufgestellter Computer zwischen dem erhöhten Rand und dem Klemm-Mittel festklemmbar ist.

9. Vorrichtung nach Anspruch 8, **dadurch gekennzeichnet, daß** der Rand (46) auf einer kürzeren Seite der Trägerfläche vorgesehen ist und sich das Langloch (28) sich nur über einen Teil der Länge der Trägerfläche (42) erstreckt, der sich in einem Abstand von dem Rand befindet.

10. Vorrichtung nach Anspruch 8 oder 9, **dadurch gekennzeichnet, daß** vor dem erhöhten Rand (46) eine Vertiefung (44) in der Trägerfläche (42) vorgesehen ist, welche sich über die gesamte Breite der Trägerfläche erstreckt.

11. Vorrichtung nach einem der Ansprüche 8 bis 10, **dadurch gekennzeichnet, daß** die Klemmvorrichtung von einem Klemmwinkel gebildet ist, welcher mittels einer Schraube verschiebbar in dem Langloch (28) geführt ist.

12. Vorrichtung nach einem der vorgehenden Ansprüche, **dadurch gekennzeichnet, daß** wenigstens ein Paar von Schlitzen (26) in der Trägerfläche (42) vorgesehen ist, durch welche der Kabelbinder (56) durchsteckbar ist.

13. Vorrichtung nach Anspruch 12, **dadurch gekennzeichnet, daß** die Paare von Schlitzen (26) so angeordnet sind, daß jeweils vier Schlitze in Form von Quadraten in der Nähe eines Rands der Trägerfläche vorgesehen sind.

14. Vorrichtung nach einem der vorgehenden Ansprüche 2 bis 13, **dadurch gekennzeichnet, daß** das Gehäuse einen Vorsprung aufweist, an welchem die Kabel gebündelt oder separiert mittels Klemmleiste fixierbar sind.
